# EUROPÄISCHE PATENTANMELDUNG

(11) **EP 1 206 025 A2**
(43) Veröffentlichungstag der Anmeldung: **15.05.2002**
(21) Anmeldenummer: 01126165.8
(22) Anmeldetag: 03.11.2001
(51) Int. Cl.: H02H 11/00

(54) **Vorrichtung zum Verpolschutz elektrischer Komponenten**

(30) Priorität: 07.11.2000 DE 10055077
(71) Anmelder: ROBERT BOSCH GMBH, 70442 Stuttgart (DE)
(72) Erfinder: Schenk, Joachim, 38536 Meinersen-Ohof (DE); Breunig, Volker, 71452 Ditzingen (DE)

(57) **Zusammenfassung**

Es wird eine Vorrichtung zum Verpolschutz elektrischer Komponenten vorgeschlagen. Sie weisen zumindest einen Anschluß für eine elektrische Energieversorgung (8) auf. Es sind Verpolschutzmittel (13, 18, 20, 22, 24) vorgesehen, die im Falle eines verpolten Anschlusses der Energieversorgung (8) die Energiezufuhr zu zumindest einer elektrischen Komponente (10, 11, 16) beeinflussen, wobei zumindest ein Verpolschutzmittel (13, 24) Teil einer Spannungserhöhungsschaltung (13, 15, 18, 19, 24) ist zur Spannungserhöhung für die elektrische Komponente (10, 11, 16) und/oder zumindest eine weitere elektrische Komponente (15, 16).

## Beschreibung

### Stand der Technik

Die Erfindung geht aus von einer Vorrichtung zum Verpolschutz elektrischer Komponenten nach der Gattung des unabhängigen Anspruchs. In einem Kraftfahrzeugbordnetz kann es zur Verpolung und auch zu starken Spannungschwankungen in der Versorgung kommen, was zur Zerstörung bzw. zur Beeinträchtigung bestimmter Komponenten führen kann. Zum Schutz der elektrischen Komponenten ist ein Verpolschutz vorgesehen, der beispielsweise in Form einer Diode, eines Transistors, oder Relais mit vorgeschalteter Diode am Spulenanschluß realisiert ist. So unterbricht das Relais die Versorgung der nachgeschalteten elektrischen Komponenten, wenn die verpolte Versorgungsspannung über die verpolte Diode ein Schalten des Relais bewirkt. Zur Aufrechterhaltung eines einwandfreien Betriebs bei Spannungschwankungen werden Blockendensatoren oder diesen vorgeschaltete Hochsetzsteller verwendet. Eine gattungsgemäße Vorrichtung ist beispielsweise in der DE-A 39 24 499 beschrieben. Dort ist ebenfalls ein herkömmliches Schaltnetzteil für ein Batterie-Ladegerät vorgesehen.

Der Erfindung liegt die Aufgabe zugrunde, eine Schaltungsanordnung anzugeben, welche unter Gewährleistung der oben genannten Funktionen sich durch einen einfachen Aufbau auszeichnet. Diese Aufgabe wird durch die Merkmale des unabhängigen Anspruchs gelöst.

### Vorteile der Erfindung

Die erfindungsgemäße Vorrichtung zum Verpolschutz elektrischer Komponenten weist zumindest einen Anschluß für eine elektrische Energieversorgung auf. Es sind Verpolschutzmittel vorgesehen, die im Falle eines verpolten Anschlusses der Energieversorgung die Energiezufuhr zumindest einer elektrischen Komponente beeinflussen. Erfindungsgemäß ist zumindest ein Verpolschutzmittel Teil einer Spannungserhöhungsschaltung für die und/oder eine weitere elektrische Komponente. Durch die Verwendung eines Verpolschutzmittels als Teil der Spannungserhöhungsschaltung kann die Anzahl der elektrischen/elektronischen Bauelemente verringert werden. Verzugsweise ist ein Relais als Verpolschutzmittel verwendet, dessen Spule als Energiespeicher für die Spannungserhöhungsschaltung verwendet werden kann. Somit ist die Spule des Verpolschutzmittels Teil eines Hochsetzstellers.

Zweckmäßigerweise ist ein Schaltmittel vorgesehen, das den durch die Spule des Relais fließenden Strom beeinflußt. Vorteilhafterweise ist eine pulsweitenmodulierte Ansteuerung des Schaltmittels in der Weise vorzusehen, dass der sich einstellende mittlere Spulenstrom noch nicht eine Veränderung des Schaltzustands des Relais bewirkt. Damit ist einerseits die Energieversorgung der Spule des Relais sichergestellt. Andererseits trägt die Spule im geöffneten Zustand des Schaltmittels dazu bei, einen der Spannungsstabilisierung dienenden Kondensator aufzuladen, so dass sich dessen Spannung erhöht. Somit eignet sich gerade eine Spule im Verpolschutzkreis zur gleichzeitigen Verwendung in einer Spannungserhöhungsschaltung.

Als Schaltmittel ist vorzugsweise MOSFET verwendet. Dieser MOSFET umfaßt standardmäßig bereits eine Diode, die als Verpolschutzdiode bei einer verpolten Energieversorgung den zugeführten Strom ableitet und so die elektrischen Komponenten schützt. Andererseits dient der MOSFET als Schaltmittel für die Spannungserhöhungsschaltung beispielsweise als Hochsetzsteller, wie eingangs bereits beschrieben.

Die Steuerung des Schaltmittels übernimmt ein Mikrocontroller. Dieser erfaßt die gegebenenfalls zu stabilisierende Spannung. Unterschreitet diese Spannung einen bestimmten Grenzwert, so aktiviert der Mikrocontroller das Schaltmittel im Sinne des für die Spannungserhöhung gewünschten Puls- Pausenverhältnisses. Dieser Mikrocontroller übernimmt außerdem weitere Aufgaben wie beispielsweise die Ansteuerung eines Leistungshalbleiters, über welchen elektrische Verbraucher zu- und abgeschaltet werden. Somit trägt auch eine entsprechende Verwendung dieses Mikrocontrollers für weitere Zwecke zu einer Reduzierung des hierfür benötigten Bauteileaufwands bei.

Weitere zweckmäßige Weiterbildungen ergeben sich aus weiteren abhängigen Ansprüchen und aus der Beschreibung.

### Zeichnung

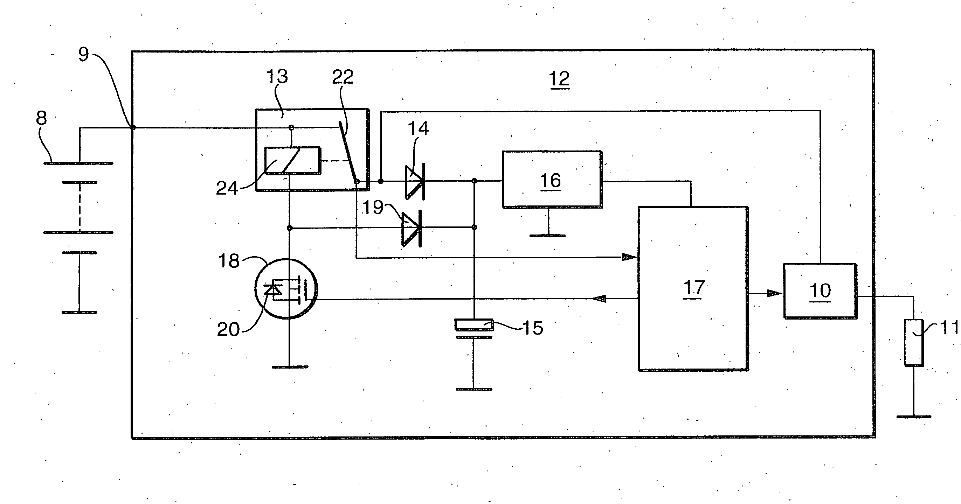

Ein Ausführungsbeispiel der Erfindung ist in der Zeichnung dargestellt und wird im folgenden näher beschrieben.

Es zeigt die Figur ein Blockschaltbild der erfindungsgemäßen Vorrichtung.

### Beschreibung des Ausführungsbeispiels

Eine gegen Masse geschaltete Batterie 8 versorgt ein Steuergerät 12 mit Energie. Im regulären Betrieb ist der Pluspol der Batterie 8 mit dem Eingang 9 des Steuergeräts 12 verbunden. Der Eingang 9 ist elektrisch leitend mit einem Relais 13 kontaktiert. Das Relais 13 besteht aus einer Spule 24 und einem Relaisschalter 22. Wird die Spule 24 von einem hinreichend großen Strom durchflossen, so wird der Relaisschalter 22 im Sinne eines Öffnens betätigt. Der über den Eingang 9 zugeführte elektrische Strom verzweigt sich. Er fließt einerseits bei der dargestellten Polarität über die Spule 24 und eine zweite Diode 19, um gegebenenfalls einen Kondensator 15 aufzuladen. Andererseits fließt der über den Eingang 9 zugeführte Strom beim geschlossenen Zustand des Relaisschalters 22 über eine erste Diode 14 bzw. bei entsprechender Ansteuerung eines Leistungsschalters 10 über eine Last 11 gegen Masse ab. An dem gemeinsamen Potential der Spule 24 und der zweiten Diode 19 ist ein Schaltmittel 18 angeschlossen. In dem Schaltmittel 18 ist eine Verpolschutzdiode 20 parallel zu dem Schalter angeordnet. Bei der in der Figur dargestellten Polung ist die Verpolschutzdiode 20 in Sperrichtung gepolt. Das gemeinsame Potential des Relaisschalters 22 und der ersten Diode 14 wird von einem Analog- Digitalwandler eines Mikrocontrollers 17 erfaßt. Der Mikrocontroller 17 wiederum steuert sowohl das Schaltmittel 18 als auch den Leistungsschalter 10 an. Der Mikrocontroller 17 wird von einem Spannungsstabilisator 16 versorgt, der für die Bereitstellung der internen Versorgung des Steuergerätes 12 zuständig ist. Der Spannungsstabilisator 16 wiederum wird versorgt durch die am Kondensator 15 abfallende Spannung. Als Verpolschutzmittel kommen das Relais 13 und die in dem Schaltmittel 18 integrierte Verpolschutzdiode 20 zum Einsatz. Beider dargestellten korrekten, das heißt nicht verpolten Energieversorgung ist die Verpolschutzdiode 20 in Sperrichtung gepolt, so dass kein ein Öffnen des Relaisschalters 22 bewirkender Strom durch die Spule 24 fließt. Ist jedoch fälschlicher Weise anstelle des positiven Anschlusses der Batterie 8 der negative Pol mit dem Eingang 9 verbunden, so wird die Verpolschutzdiode 20 in Durchlaßrichtung betrieben. Somit fließt auch ein Strom über die Spüle 24, der in der Regel so groß ist, dass das Relais 13 anzieht, das heißt, dass
-da das Relais 13 als Öffner ausgeführt ist- der Relaisschalter 22 geöffnet wird. Der Strom kann somit nicht mehr die elektrischen Komponenten wie beispielsweise den Leistungsschalter 10, die Last 11 und den Spannungsstabilisator 16 erreichen. Damit sind diese elektrischen Komponenten gegen Verpolung geschützt.

Erfindungsgemäß ist das Schaltmittel 18 als ein MOSFET-Transistor ausgeführt. Bei solchen Transistoren ist die Verpolschutzdiode 20 standardmäßig als Inversdiode vorhanden.

Im Normalzustand versorgt die Batterie 8 über den Relaisschalter 22 und die erste Diode 14 den Kondensator 14 und damit den Spannungsstabilisator 16. Der Spannungsstabilisator 16 ist für die Bereitstellung der internen Versorgung des Steuergerätes 12 und dessen Mikrocontroller 17 vorgesehen. Der Mikrocontroller 17 ist nun einerseits für die Ansteuerung des Leistungsschalters 10 zuständig. Über diesen Leistungsschalter 10 wird die Last 11 mit elektrischer Energie versorgt. Wird dem Mikrocontroller 17 beispielsweise über ein Bediensignal mitgeteilt, die Last 11 zu aktivieren oder zu deaktivieren, so steuert der Mikrocontroller 17 den Leistungsschalter 10 im Sinne eines Schließens oder Öffnens an. Bediensignale könnten beispielsweise über ein nicht dargestelltes Bussystem zugeführt werden, über welches der Mikrocontroller 17 kommunizieren kann.

Außerdem wertet der Mikrocontroller 17 das Potential bzw. die dazugehörige Spannung aus, mit der der Stabilisator 16 versorgt wird. Unterschreitet diese Spannung einen vorgebbaren Grenzwert, so erkennt der Mikrocontroller 17 auf einen Spannungseinbruch. Daraufhin leitet er entsprechende Gegenmaßnahmen ein, die der Spannungserhöhung für eine elektrische Komponente, hier der Stabilisator 16 dienen. Dazu steuert der Mikrocontroller 17 das Schaltmittel 18 im getakteten Betrieb an. Das Puls-Pausenverhältnis des Ansteuersignals ist dabei so gewählt, dass der die Spule 24 durchfließende Strom nicht zu einem Öffnen des Relaisschalters 22 führt. Ist das Schaltmittel 18 geschlossen, ist die Spule 24 des Relais 13 gegen Masse geschaltet. Die Spule 24 des Relais 13 versucht, den Strom, der bei aktiviertem Schaltmittel 18 fließt, nach dem Abschalten des Schaltmittels 18 aufrecht zu erhalten, so dass der in der Spule 24 gespeicherte Strom über die zweite Diode 19 den Kondensator 15 auflädt. Die Spule 24 des Relais 13 stellt in diesem Augenblick (Schaltmittel 18 geöffnet) selbst eine Spannungsquelle dar, so dass aufgrund der Reihenschaltung der Batterie 8 und der Spule 24 dies zu einer erhöhten Spannung an dem Kondensator 15 führt. Somit sind die Verpolschutzmittel 24, nämlich die Spule 24, 'Teil einer Spannungserhöhungsschaltung. Diese Spannungserhöhungsschaltung wird gebildet in Verbindung mit dem Schaltmittel 18. In einer alternativen Ausgestaltung ist das Schaltmittel 18 in dem Spannungsstabilisator 16 integriert.

Der Spannungsstabilisator 16 kann die eigene Eingangsspannung über die Pulsweitenmodulation des Schaltmittels 18 beeinflussen.

## Patentansprüche

1. Vorrichtung zum Verpolschutz elektrischer Komponenten, mit zumindest einem Anschluß (9) für eine elektrische Energieversorgung (8), mit Verpolschutzmitteln (13, 18, 20, 22, 24), die im Falle eines verpolten Anschlusses der Energieversorgung (8) die Energiezufuhr zu zumindest einer elektrischen Komponente (10, 11, 16) beeinflussen, **dadurch gekennzeichnet, dass** zumindest ein Verpolschutzmittel (13, 24) Teil einer Spannungserhöhungsschaltung (13, 15, 18, 19, 24) ist zur Spannungserhöhung der elektrischen Komponente (10, 11, 16) und/oder zumindest einer weiteren elektrischen Komponente (15, 16).

2. Vorrichtung nach Anspruch 1, **dadurch gekennzeichnet, dass** als Verpolschutzmittel ein Relais (24) vorgesehen ist.

3. Vorrichtung nach einem der vorhergehenden Ansprüche, **dadurch gekennzeichnet, dass** als Verpolschutzmittel ein MOSFET (18) vorgesehen ist mit integrierter Diode (20) oder einem Schaltmittel mit parallelgeschalteter Diode.

4. Vorrichtung nach einem der vorhergehenden Ansprüche, **dadurch gekennzeichnet, dass** eine Spule (24) des Relais (13) Teil der Spannungserhöhungsschaltung ist.

5. Vorrichtung nach einem der vorhergehenden Ansprüche, **dadurch gekennzeichnet, dass** ein Schaltmittel (18) vorgesehen ist, welches im Spannungserhöhungsbetrieb das Relais (13) so ansteuert, dass ein Strom durch die Spule (24) des Relais (13) fließt, der noch keine Veränderung eines Schaltmittels (22) des Relais (13) bewirkt, welches über die Spule (24) aktivierbar ist.

6. Vorrichtung nach einem der vorhergehenden Ansprüche, **dadurch gekennzeichnet, dass** das Schaltmittel (18) pulsweitenmoduliert angesteuert ist.

7. Vorrichtung nach einem der vorhergehenden Ansprüche, **dadurch gekennzeichnet, dass** ein Mikrocontroller (17) vorgesehen ist, der in Abhängigkeit von einer erfaßten Spannung das Schaltmittel (18) ansteuert.

8. Vorrichtung nach einem der vorhergehenden Ansprüche, **dadurch gekennzeichnet, dass** die Spannungserhöhungsschaltung (13, 14, 15, 18) der Spannungsversorgung eines Spannungsstabilisators (16) dient.

9. Vorrichtung nach einem der vorhergehenden Ansprüche, **dadurch gekennzeichnet, dass** der Spannunsstabilisator (16) den Mikrocontroller (17) und/oder ein Steuergerät (12) mit Energie versorgt.

10. Vorrichtung nach einem der vorhergehenden Ansprüche, **dadurch gekennzeichnet, dass** der Mikrocontroller (17). zumindest einen Leistungshalbleiter (10) ansteuert zur Aktivierung/Deaktivierung zumindest einer elektrischen Last (11).

11. Vorrichtung nach einem der vorhergehenden Ansprüche, **dadurch gekennzeichnet, dass** das Schaltmittel (18) in dem Spannungsstabilisator (16) integriert ist.

12. Vorrichtung nach einem der vorhergehenden Ansprüche, **dadurch gekennzeichnet, dass** der Spannungsstabilisator (16) die eigene Eingangsspannung über die Pulsweitenmodulation des Schaltmittels (18) beeinflusst.
